(19) Europäisches Patentamt
European Patent Office
Office européen des brevets

(11) EP 1 136 580 B1

(12) # EUROPEAN PATENT SPECIFICATION

(45) Date of publication and mention of the grant of the patent: **21.02.2007 Bulletin 2007/08**

(21) Application number: **00909739.5**

(22) Date of filing: **17.03.2000**

(51) Int Cl.:
*C22C 38/06* (2006.01) *C22C 38/02* (2006.01)
*C22C 38/04* (2006.01)

(86) International application number:
**PCT/JP2000/001679**

(87) International publication number:
**WO 2001/014609 (01.03.2001 Gazette 2001/09)**

(54) **USE OF STEEL IN LASER WELDING**

VERWENDUNG EINES STAHLES ZUM LASERSCHWEISSEN

UTILISATION D'UN ACIER AU SOUDAGE PAR LASER

(84) Designated Contracting States:
**DE FR GB**

(30) Priority: **19.08.1999 JP 23234299**

(43) Date of publication of application:
**26.09.2001 Bulletin 2001/39**

(73) Proprietor: **NIPPON STEEL CORPORATION**
**Tokyo 100-8071 (JP)**

(72) Inventors:
- **KOJIMA, Kazuhiro, Nippon Steel Corp. Futtsu City, Chiba 293-0011 (JP)**
- **OHKITA, Shigeru, Nippon Steel Corporation Futtsu City, Chiba 293-0011 (JP)**
- **FUJI, Masao, Nippon Steel Corporation Futtsu City, Chiba 293-0011 (JP)**
- **AIHARA, Syuji, Nippon Steel Corporation Futtsu City, Chiba 293-0011 (JP)**
- **HOSHINO, Manabu, Nippon Steel Corporation Tokai City, Aichi 476-8686 (JP)**
- **SAITOH, Naoki, Nippon Steel Corporation Tokai City, Aichi 476-8686 (JP)**
- **TSUZUKI, Takeshi, Nippon Steel Corporation Tokai City, Aichi 476-8686 (JP)**

(74) Representative: **Vossius & Partner**
**Siebertstrasse 4**
**81675 München (DE)**

(56) References cited:
**JP-A- 3 180 444** **JP-A- 9 194 998**
**JP-A- 2000 109 946**

- **PATENT ABSTRACTS OF JAPAN vol. 1997, no. 11, 28 November 1997 (1997-11-28) & JP 9 194998 A (NKK CORP), 29 July 1997 (1997-07-29)**
- **PATENT ABSTRACTS OF JAPAN vol. 0154, no. 29 (C-0880), 31 October 1991 (1991-10-31) & JP 3 180444 A (NIPPON STEEL CORP), 6 August 1991 (1991-08-06)**
- **PATENT ABSTRACTS OF JAPAN vol. 0124, no. 26 (C-542), 10 November 1988 (1988-11-10) & JP 63 157834 A (MITSUBISHI HEAVY IND LTD), 30 June 1988 (1988-06-30)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 136 580 B1

## Description

### Technical Field

This invention relates to the use of a steel material such as a steel plate or sheet, a steel pipe and an H-shape steel excellent in laser-weldability and used for shipbuilding, machinery, buildings, industrial plants and other steel structures.

### Background Art

Laser welding has lately become applicable to heavy steel plates as laser welders have become more powerful. In welding heavy steel plates using a laser welder, however, blowholes and solidification cracks are more likely to occur than in arc welding, and the deterioration of the strength, toughness and fatigue properties, etc. of welded joints caused by these defects sometimes creates serious problems in welding work. To prevent the problems, measures for controlling the position of laser beam irradiation and the like have so far been worked out as disclosed in Japanese Unexamined Patent Publication No. S60-206589. However, such a method requires that the laser irradiation position be optimized every time a plate thickness or a welding condition changes and, thus, is not practical.

Further, in the fields of actual welding work, welding is often done to steel surfaces with mill scales remaining thereon and to cut sections covered with scales caused by laser cutting, plasma cutting or gas cutting, etc. without any pretreatment to remove them. The occurrence of the blowholes and solidification cracks is more notable in these cases than in the case of welding clean metal surfaces such as machined surfaces.

However, removing scales of cut sections and mill scales when fabricating steel structures by laser welding is not realistic from the viewpoints of efficiency and economy. Thus, technologies capable of suppressing the occurrence of blowholes and solidification cracks even when welding is done to steel surfaces with mill scales remaining thereon and to sections cut by laser cutting, plasma cutting or gas cutting, etc. without removing the scales, are desired.

Such technologies include, for example, a method of supplying deoxidizing elements to a weld metal using a filler wire as disclosed in Japanese Unexamined Patent Publication No. H8-300002. By this method, however, there is a problem that homogeneous distribution of deoxidizing elements in the plate thickness direction cannot be secured when the plates to be welded are thick, because the deoxidizing elements are supplied only through plate surfaces. For this reason, for the laser welding of steel plates, it is desirable to contain necessary deoxidizing elements as components in steel.

Laser butt welding is known also from JP-A-9-194998 where upset welding takes place.

### Disclosure of the Invention

In view of the above background, the present invention as disclosed in claim 1 provides a structural steel excellent in laser-weldability capable of suppressing the occurrence of blowholes and solidification cracks even when scales are included in laser welding joints.

To solve the problems, the present inventors have clarified the relationship between steel chemistry and permissible mill scale thickness, etc., and have established the present invention, as a result of furthering studies on the relationship of the occurrence of blowholes and solidification cracks with a scale thickness and the addition amount of deoxidizing elements.

### Brief Description of the Drawings

Fig. 1 is a schematic view showing an example of laser welding joint configurations.
Fig. 2 is a schematic view showing another example of laser welding joint configurations.
Fig. 3 is a graph showing the influence of the value of X on the number of blowholes.
Fig. 4 is a graph showing the influence of the value of Y on the number of blowholes.
Fig. 5 is a graph showing the relationship between the thickness of scales and the occurrence of cracks.
Fig. 6 are schematic views of photographs showing comparisons of weld penetration shapes in the different scale thicknesses.
Fig. 7 is a graph showing the relationship between hot rolling finishing temperature and mill scale thickness.

Best Mode for Carrying out the Invention

In the first place, the reason for limiting each of the component elements in the present invention is described hereafter.

C: With an ultra low C content below 0.01 weight %, steel strength is insufficient and solidification cracks occur in weld metal. With a C content exceeding 0.20 weight %, in contrast, the toughness of heat affected zones and weld metal decreases. For this reason, the content of C is limited to 0.01 weight % or more and 0.20 weight % or less. However, for suppressing the generation of CO gas in particular, the lower the C content, the better.

Si: Si is added as a deoxidizer and a steel strengthening element, but its effect is insufficient with an addition below 0.01 weight %. When it exceeds 1.5%, on the other hand, defects are frequently caused by scales during rolling. For this reason, the content of Si is limited to 0.01 weight % or more and 1.5 weight % or less.

Mn: Mn is an effective element to enhance the strength of steel plates, but its effect does not show with an addition below 0.2 weight %. It is known, however, that addition exceeding 2.0 weight % accelerates the occurrence of blowholes. Thus the content of Mn is limited to 0.2 weight % or more and 2.0 weight % or less.

P and S: The content of either P or S is limited to 0.02 weight % or less, since excessive addition deteriorates the toughness of steel plates and the heat affected zones.

Al: Al is an important element as a deoxidizer, and lowering its content to below 0.0005 weight % is unrealistic because it imposes heavy burden on steelmaking processes. When its content exceeds 1.0%, on the other hand, the impact toughness of steel plates is deteriorated. Therefore, the addition amount of Al is limited to 0.031 weight % or more and 1.0 weight % or less.

Further, in the present invention, one or more of Nb, V, Mo, Cu, Ni, Cr and B can be added to steel in addition to the above elements. The reason for limiting each of these elements is described hereafter.

Nb: Nb is an important element to control the microstructure of steel plates in a thermo-mechanical control process (TMCP), but its effect is insufficient with a content below 0.001 weight %. An excessive addition, on the other hand, deteriorates the toughness of steel plates. Thus the addition amount of Nb is limited to 0.001 weight % or more and 0.1 weight % or less.

V: V is another important element to control the microstructure of steel plates in a TMCP and is also a necessary element to secure the high temperature strength of heat resisting steels. Its effect is insufficient with a content below 0.001 weight %, but its excessive addition deteriorates toughness. For this reason, the addition amount of V is limited to 0.001 weight % or more and 1.0 weight % or less.

Mo: Mo is an element to suppress embrittlement at post weld heat treatment (PWHT) and can be added as a substitute for Mn. Its effect is insufficient with an addition below 0.001 weight %, but the toughness of steel plates is deteriorated with an addition exceeding 2.0 weight %. Therefore the addition amount of Mo is limited to 0.001 weight % or more and 2.0 weight % or less.

Cu: Cu can be added as a substitute for Mn for reinforcing strength. However, its effect is insufficient with an addition below 0.01 weight % and, when added in excess of 3.0 weight %, solidification cracks occur in weld metal. Therefore, the addition amount of Cu is limited to 0.01 weight % or more and 3.0 weight % or less.

Ni: Ni is a typical element to improve the low temperature toughness of steel plates, but its effect is insufficient with a content below 0.01 weight % and, when added in excess of 7.0 weight %, solidification cracks occur to weld metal. The addition amount of Ni is therefore limited to 0.01 weight % or more and 7.0 weight % or less.

Cr: Cr can be added as an element to enhance steel strength and is also a necessary element to secure the high temperature strength of heat resisting steels. Its effect is insufficient with a content below 0.01 weight %, but the toughness of steel plates is deteriorated when it is added in excess of 5.0 weight %. For this reason, the addition amount of Cr is limited to 0.01 weight % or more and 5.0 weight % or less.

B: B can also be added as an element to enhance steel strength, but its effect is insufficient with a content below 0.0001 weight %, while the toughness of steel plates is deteriorated when it is added in excess of 0.01 weight %. For this reason, the addition amount of B is limited to 0.0001 weight % or more and 0.01 weight % or less.

Ti: An addition of Ti is acceptable since it acts as a deoxidizing element. It has to be noted, however, that its effect is insufficient when added below 0.001 weight % and that the toughness of steel plates is deteriorated when it is added in excess of 0.1 weight %. For this reason, the addition amount of Ti is limited to 0.001 weight % or more and 0.1 weight % or less.

Zr: An addition of Zr is acceptable since it also acts as a deoxidizing element. It has to be noted, however, that its effect is insufficient when added below 0.001 weight % and that the toughness of steel plates is deteriorated when it is added in excess of 0.1 weight %. For this reason, the addition amount of Zr is limited to 0.001 weight % or more and 0.1 weight % or less.

Mg: An addition of Mg is acceptable since it also acts as a deoxidizing element. It has to be noted, however, that its effect is insufficient when added below 0.0001 weight % and that the stability of plasma generated in a keyhole during laser welding is deteriorated when it is added in excess of 0.02 weight %. For this reason, the addition amount of Mg is limited to 0.0001 weight % or more and 0.02 weight % or less.

Ca: An addition of Ca is acceptable since it also acts as a deoxidizing element. It has to be noted, however, that its effect is insufficient when added below 0.0001 weight % and that the stability of plasma generated in a keyhole during laser welding is deteriorated when it is added in excess of 0.02 weight %. For this reason, the addition amount of Ca is limited to 0.0001 weight % or more and 0.02 weight % or less.

REM: An addition of REM is acceptable since it also acts as a deoxidizing element. It has to be noted, however, that its effect is insufficient when added below 0.001 weight % and that the stability of plasma generated in a keyhole during laser welding is deteriorated when it is added in excess of 0.3 weight %. For this reason, the addition amount of REM is limited to 0.001 weight % or more and 0.3 weight % or less.

Next, the mechanism of the occurrence of blowholes and countermeasures against it are described regarding the case of laser welding of cut end sections covered with scales and steel materials with mill scales as specified in the present invention.

In laser welding involving cut end sections covered with scales and the mill scales of steel plates, blowholes are formed in weld metal by CO gas generated by the following reaction:

$$(\text{oxygen brought in by scales}) + (\text{C in steel}) \rightarrow \text{CO gas}$$

Therefore, for suppressing the occurence of blowholes, it is important to fix oxygen with deoxidizing elements and prevent the generation of CO gas. The necessary and sufficient condition for this is that the values of X and Y defined by equations (1) and (2) below satisfy $0.4 < x < 1.5$ and $0.4 < Y < 1.5$, respectively,

$$X = 0.88[\%Al] + 1.14[\%Si] \quad \ldots (1)$$

$$Y = 0.88[\%Al] + 1.14[\%Si] + 0.67[\%Ti] + 0.35[\%Zr] + 0.66[\%Mg] + 0.40[\%Ca] + 0.30[\%REM] \quad \ldots (2).$$

The coefficient of each of the elements and the upper and lower limits of X and Y in the above equations were determined through experiments.

The experiments are described below.

First, the thicknesses of various scales on cut end sections and mill scales were investigated. As a result, it was found that the maximum and minimum mill scale thicknesses were 58 μm and 5 μm, respectively. With regard to the scales on cut end sections, the scale thickness of laser-cut sections was about 5 μm, that of plasma-cut sections about 15 μm, and that of gas-cut sections about 25 μm. The scale thickness of the cut end sections was determined mainly by the cutting method and no difference was found among specimens cut by the same method. It was confirmed as a result of X-ray diffraction analyses that the scales consisted of $Fe_2O_3$, $Fe_3O_4$ and FeO and that all of them brought oxygen into the weld metal.

Here, when only the addition amount of deoxidizing elements is examined, a scale thickness range up to the maximum observed thickness of 58 μm has to be taken into consideration. However, mill scales up to 50 μm in thickness are examined in the discussion below because, when the mill scale thickness exceeds 50 μm, occurrence of solidification cracks is observed in the weld metal, as explained later.

More specifically, the lower limits of X and Y specified by the equations (1) and (2) were determined based on the laser welding of an elbow angle joint composed of a steel plate covered with mill scales 1 of 49 μm in thickness and a gas-cut end section 2 covered with scales of 25 μm in thickness as shown in Fig. 1. The upper limits, on the other hand, were determined based on the laser welding of a butt joint of two laser-cut end sections 3 each of which is covered with scales of 5 μm in thickness as shown in Fig. 2.

Examples of the test results are shown in Figs. 3 and 4. The chemical composition of the materials shown in Fig. 3 is, in weight %, 0.08%C-Si-1.3%Mn-0.01%P-0.005%S-0.5%Mo-Al and the same shown in Fig.4 is, in weight %, 0.08%C-Si-1.3%Mn-0.01%P-0.005%S-0.5%Mo-Al-Ti-Zr-Mg-Ca-REM. The same results were obtained with the materials of other chemical compositions as far as the scale thickness was the same. From these results it was confirmed that, when the values of X and Y were below 0.4 weight %, blowholes occurred because oxygen could not be fixed due to the lack of deoxidizing elements. It was also confirmed that, when the values of X and Y exceeded 1.5 weight %, on the other hand, the blowholes increased because the plasma generated in the keyhole during laser welding was made unstable. For the above reasons, the values of X and Y specified in the equations (1) and (2) were set over 0.4 weight % and below 1.5 weight %.

The mechanism of the occurrence of solidification cracks and countermeasures against it will be described below. As a result of investigating various weld metals of laser welding, it was confirmed that the occurrence of the solidification cracks largely depended on the shape of the penetration of weld metal and it was discovered that the factor to determine the solidification shape thereof was the scale thickness.

The scale thickness as referred to here means a total thickness of the scales existing along the direction of the laser beam irradiation and, in the case of an elbow angle joint as shown in Fig. 1, for example, the scale thickness is 74 μm (25 μm + 49 μm). The present inventors discovered through tests of various cut end sections that the solidification cracks occurred in the weld metal frequently when the total scale thickness exceeded 75 μm. A case of a total scale thickness exceeding 75 μm is the case of an elbow angle joint wherein a gas-cut end section 2 and a steel material covered with mill scales 1 are combined as shown in Fig. 1.

Since the scale thickness of gas-cut end sections is about 25 μm and constant as described before, the solidification cracks begin to occur frequently when the mill scales of a steel material are 50 μm or more in thickness. Examples of the experimental results are shown in Figs. 5 and 6. When the mill scale thickness exceeds 50 μm, the penetration takes a convex shape and a great number of solidification cracks are formed by this. Note that the chemical composition of the materials shown in Figs. 5 and 6 is, by weight %, 0.08%C-0.4%Si-1.3%Mn-0.01%P-0.005%S-0.5%Mo-0.05%Al, but the same results were obtained with materials of other chemical compositions as far as the scale thickness was the same. For these reasons, the thickness of the mill scales of steel plates was limited to 50 μm or less.

The thickness of the mill scales on steel plates was defined to be 50 μm or less in the present invention. With regard to a method to make the mill scale thickness 50 μm or less, it is necessary to apply descaling under the condition of 5 MPa or more in pressure at one or both of the exit and entry of a rolling mill during each rolling pass for removing scales formed between the passes of hot rolling, and to finish the hot rolling at 650 to 900˚C for suppressing the formation of scales during cooling after the rolling.

Fig. 7 is a graph showing an example of the relationship between the rolling finishing temperature and the scale thickness when descaling is applied at every rolling pass using high pressure water of 100 MPa. Even when the descaling is applied under such a high pressure condition, the hot rolling finishing temperature of 900˚C or less is an essential condition for obtaining the scale thickness of 50 μm or less stipulated in the present invention. Although it is possible to raise a hot rolling finishing temperature while maintaining a mill scale thickness of 50 μm or less by raising the descaling pressure yet higher, the quality of steel plates is adversely affected seriously when the hot rolling finishing temperature exceeds 900˚C. For this reason, the upper limit temperature is set at 900˚C. Even when the descaling pressure is low, it is possible to maintain a mill scale thickness of 50 μm or less by lowering a hot rolling finishing temperature. However, when a hot rolling finishing temperature is lowered to below 650˚C, reduction loads of a rolling mill becomes extremely high and the metallic structure and quality of steel plates are adversely affected. For this reason, the lower limit temperature was set at 650˚C. Further, in the present invention, the lower limit of a descaling pressure is set at 5 MPa, which is the lowest descaling pressure required for achieving a mill scale thickness of 50 μm or less when a hot rolling finishing temperature is of the lower limit of 650˚C. Although it is not necessary to specify an upper limit of a descaling pressure in the present invention, it is desirable to set the upper limit at 100 MPa in consideration of the capacity of a descaling apparatus.

It is further desirable in the present invention to lower a mill scale thickness to 20 μm or less, and this can be achieved by controlling a hot rolling finishing temperature to 800˚C or lower.

## Examples

Effects of the present invention are described hereafter based on examples.

The steels used for the tests were refined in a converter and continuously cast into slabs of 250 mm in thickness. Chemical compositions of the steels are shown in Table 1. The slabs were hot rolled into plates of 6, 9, 15 and 20 mm in thickness. During the rolling operation, the mill scale thickness of the plates was changed from 5 to 60 μm by changing the rolling temperatures and descaling conditions.

Table 1 Chemical composition of sample steel plates (weight %)

| Steel | C | Si | Mn | P | S | Al | Cu | Ni | Cr | Mo | Nb | V | B | Ti | Zr | Mg | Ca | RBM | Value of X or Y | Remarks |
|---|---|---|---|---|---|---|---|---|---|---|---|---|---|---|---|---|---|---|---|---|
| B | 0.11 | 0.33 | 0.93 | 0.015 | 0.010 | 0.112 | 1.33 | Tr | Tr | Tr | Tr | Tr | Tr | 0.065 | 0.013 | 0.005 | Tr | Tr | 0.53 | Inventive steel |
| C | 0.06 | 0.11 | 1.25 | 0.018 | 0.018 | 0.580 | 0.33 | 2.15 | Tr | Tr | Tr | Tr | Tr | 0.015 | Tr | Tr | Tr | Tr | 0.65 | |
| D | 0.18 | 0.61 | 1.89 | 0.003 | 0.003 | 0.085 | 2.22 | 1.23 | 3.91 | Tr | Tr | 0.05 | 0.0008 | Tr | Tr | Tr | Tr | Tr | 0.77 | |
| F | 0.12 | 0.78 | 1.55 | 0.018 | 0.019 | 0.031 | 0.22 | 0.45 | 2.31 | 0.58 | 0.09 | Tr | Tr | 0.011 | 0.015 | 0.001 | 0.001 | 0.031 | 0.94 | |
| G | 0.15 | 0.88 | 1.35 | 0.015 | 0.008 | 0.051 | Tr | Tr | 0.55 | 1.56 | 0.03 | 0.92 | Tr | Tr | Tr | Tr | Tr | Tr | 1.05 | |
| H | 0.13 | 0.28 | 1.12 | 0.010 | 0.005 | 0.952 | Tr | Tr | Tr | Tr | Tr | Tr | Tr | Tr | Tr | Tr | Tr | Tr | 1.16 | |
| I | 0.05 | 1.02 | 1.31 | 0.007 | 0.010 | 0.056 | Tr | Tr | Tr | Tr | Tr | Tr | 0.008 | Tr | Tr | Tr | Tr | Tr | 1.21 | |
| J | 0.05 | 1.11 | 1.13 | 0.010 | 0.015 | 0.088 | Tr | Tr | Tr | Tr | Tr | Tr | Tr | Tr | Tr | Tr | Tr | Tr | 1.34 | |
| K | 0.10 | 1.10 | 1.56 | 0.018 | 0.018 | 0.181 | Tr | Tr | Tr | Tr | Tr | Tr | Tr | 0.021 | 0.032 | Tr | Tr | Tr | 1.44 | |
| L | 0.06 | 0.01 | 1.25 | 0.019 | 0.008 | 0.012 | Tr | Tr | Tr | Tr | Tr | Tr | Tr | Tr | Tr | Tr | Tr | Tr | 0.02 | Comparative steel |
| M | 0.12 | 0.08 | 1.32 | 0.005 | 0.005 | 0.051 | Tr | Tr | Tr | Tr | Tr | Tr | Tr | Tr | Tr | Tr | Tr | Tr | 0.14 | |
| N | 0.08 | 0.21 | 1.44 | 0.008 | 0.003 | 0.021 | Tr | Tr | Tr | Tr | Tr | Tr | Tr | Tr | Tr | 0.012 | 0.011 | Tr | 0.27 | |
| O | 0.08 | 0.25 | 1.52 | 0.005 | 0.002 | 0.085 | Tr | Tr | Tr | Tr | Tr | Tr | Tr | 0.012 | 0.021 | Tr | Tr | 0.020 | 0.38 | |
| P | 0.07 | 1.32 | 1.61 | 0.002 | 0.002 | 0.052 | Tr | Tr | Tr | Tr | Tr | Tr | Tr | Tr | Tr | Tr | Tr | Tr | 1.55 | |
| Q | 0.08 | 1.43 | 1.89 | 0.006 | 0.008 | 0.022 | Tr | Tr | Tr | Tr | Tr | Tr | Tr | 0.020 | 0.011 | Tr | Tr | 0.012 | 1.67 | |
| R | 0.08 | 1.59 | 1.19 | 0.015 | 0.009 | 0.015 | Tr | Tr | Tr | Tr | Tr | Tr | Tr | Tr | Tr | 0.005 | 0.005 | Tr | 1.83 | |
| S | 0.11 | 1.67 | 0.95 | 0.005 | 0.023 | 0.152 | Tr | Tr | Tr | Tr | Tr | Tr | Tr | 0.031 | 0.015 | 0.011 | 0.011 | 0.032 | 2.08 | |

The steel plates were cut, with a 6-kW laser cutter using oxygen gas, into sample steel plates having laser-cut sections at the ends. Then the sample steel plates were laser-welded to form two joint shapes, I type butt joints and L type elbow angled joints. The joints were welded in a downward welding position for the sample steel plates of 6 and 9 mm in thickness and in a sideways welding position for the ones of 15 and 20 mm in thickness. Welding conditions are listed in Table 2. The welded sample steel plates underwent the tests shown in Table 3, and the test results are shown in Tables 4 through 6. In the tables, each value of the Charpy absorbed energy is the lowest value of the samples cut out from the same steel plate. As seen in the results, the steel plates according to the present invention proved to be good in all tests, whereas the steel plates tested as comparative samples proved to be poor.

Table 2 Laser welding conditions

| | |
|---|---|
| Laser welder | $CO_2$ gas laser welder |
| Laser output | 20 kW |
| Focal length | 15 inches |
| Position of focal point | 2 mm inside from steel plate surface |
| Welding speed and position | 6 mm in thickness: 8.0 m/min. downward<br>9 mm in thickness: 4.0 m/min. downward<br>15 mm in thickness: 1.5 m/min. sideways<br>20 mm in thickness: 1.0 m/min. sideways |
| Assist gas | He |
| Gas flow rate | 40 L/min. |
| Weld length | 1,000 mm |

Table 3 Test items and criteria

| Test item | Criterion |
|---|---|
| Bead appearance | Rated good when no pits or humping beads are observed. |
| X-ray test | Rated good when no blowholes or cracks are observed. |
| Tensile test of joints | Rated good when fracture occurs in base metal. |
| Charpy impact test<br><br>Test piece size<br>6 mm in thickness: 5 mm sub-size<br>9 mm in thickness: 7.5 mm sub-size<br>15 mm in thickness: full size with 2-mm V notch<br>20 mm in thickness: full size with 2-mm V notch | Three test pieces were tested for each of weld metal, heat affected zone and base metal at 0°C.<br>Rated good when the lowest absorbed energy value is equal to or above the following respective reference value:<br><br>Reference value<br>6 mm in thickness: 20 J or more<br>9 mm in thickness: 30 J or more<br>15 mm in thickness: 40 J or more<br>20 mm in thickness: 40 J or more |

Table 4 Test results

| Test No. | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray Test | Tensile test | Charpy/J (Lowest value) | | |
| 2 | B | 15 | 16 | Butt joint | 6 (Laser cutting) | 4 (Laser cutting) | ○ | ○ | ○ | 86 | ○ | |
| | | | | Elbow angle joint | 25 (Gas cutting) | 16 (Mill scales) | ○ | ○ | - | - | | |
| 3 | C | 15 | 32 | Butt joint | 8 (Laser cutting) | 5 (Laser cutting) | ○ | ○ | ○ | 89 | ○ | |
| | | | | Elbow angle joint | 21 (Gas cutting) | 32 (Mill scales) | ○ | ○ | - | - | | |
| 4 | D | 15 | 35 | Butt joint | 5 (Laser cutting) | 5 (Laser cutting) | ○ | ○ | ○ | 108 | ○ | |
| | | | | Elbow angle joint | 23 (Gas cutting) | 35 (Mill scales) | ○ | ○ | - | - | | |
| 6 | F | 15 | 21 | Butt joint | 5 (Laser cuttinq) | 4 (Laser cutting) | ○ | ○ | ○ | 112 | ○ | |
| | | | | Elbow angle joint | 28 (Gas cuttinq) | 21 (Mill scales) | ○ | ○ | - | - | | |
| 7 | G | 15 | 25 | Butt joint | 8 (Laser cutting) | 5 (Laser cutting) | ○ | ○ | ○ | 89 | ○ | |
| | | | | Elbow angle joint | 24 (Gas cutting) | 25 (Mill scales) | ○ | ○ | - | - | | |
| 8 | H | 15 | 5 | Butt joint | 4 (Laser cutting) | 4 (Laser cutting) | ○ | ○ | ○ | 115 | ○ | Inventive steel |
| | | | | Elbow angle joint | 24 (Gas cutting) | 5 (Mill scales) | ○ | ○ | - | - | | |

(continued)

| Test No. | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray Test | Tensile test | Charpy/J (Lowest value) | | |
| 9 | I | 15 | 42 | Butt joint | 5 (Laser cutting) | 4 (Laser cutting) | ○ | ○ | ○ | 86 | ○ | |
| | | | | Elbow angle joint | 25 (Gas cutting) | 42 (Mill scales) | ○ | ○ | - | - | | |
| 10 | J | 15 | 32 | Butt joint | 5 (Laser cutting) | 6 (Laser cutting) | ○ | ○ | ○ | 98 | ○ | |
| | | | | Elbow angle joint | 23 (Gas cutting) | 32 (Mill scales) | ○ | ○ | - | - | | |
| 11 | K | 15 | 30 | Butt joint | 5 (Laser cutting) | 4 (Laser cutting) | ○ | ○ | ○ | 115 | ○ | |
| | | | | Elbow angle joint | 26 (Gas cutting) | 30 (Mill scales) | ○ | ○ | - | - | | |
| 13 | B | 6 | 48 | Butt joint | 5 (Laser cutting) | 6 (Laser cutting) | ○ | ○ | ○ | 47 | ○ | |
| | | | | Elbow angle joint | 23 (Gas cutting) | 43 (Mill scales) | ○ | ○ | - | - | | |
| 14 | C | 6 | 15 | Butt joint | 6 (Laser cutting) | 4 (Laser cutting) | ○ | ○ | ○ | 58 | ○ | |
| | | | | Elbow angle joint | 25 (Gas cutting) | 15 (Mill scales) | ○ | ○ | - | - | | |
| 15 | D | 9 | 18 | Butt joint | 5 (Laser cutting) | 6 (Laser cutting) | ○ | ○ | ○ | 77 | ○ | |
| | | | | Elbow angle joint | 26 (Gas cutting) | 18 (Mill scales) | ○ | ○ | - | - | | |

Table 5 Test results

| Test No | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray test | Tensile test | Charpy/J (Lowest value) | | |
| 17 | F | 9 | 27 | Butt joint | 5 (Laser cutting) | 6 (Laser cutting) | ○ | ○ | ○ | 64 | ○ | Inventive steel |
| 18 | G | 9 | 42 | Butt joint | 5 (Laser cutting) | 7 (Laser cutting) | ○ | ○ | ○ | 71 | ○ | |
| | | | | Elbow angle joint | 25 (Gas cutting) | 42 (Mill scales) | ○ | ○ | - | - | | |
| 19 | H | 20 | 13 | Butt joint | 5 (Laser cutting) | 4 (Laser cutting) | ○ | ○ | ○ | 137 | ○ | |
| | | | | Elbow angle joint | 24 (Gas cutting) | 13 (Mill scales) | ○ | ○ | - | - | | |
| 20 | I | 20 | 22 | Butt joint | 6 (Laser cutting) | 4 (Laser cutting) | ○ | ○ | ○ | 105 | ○ | |
| | | | | Elbow angle joint | 25 (Gas cutting) | 16 (Mill scales) | ○ | ○ | - | - | | |
| 21 | J | 20 | 30 | Butt joint | 5 (Laser cutting) | 4 (Laser cutting) | ○ | ○ | ○ | 99 | ○ | |
| | | | | Elbow angle joint | 24 (Gas cutting) | 30 (Mill scales) | ○ | ○ | - | - | | |

(continued)

| Test No | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray test | Tensile test | Charpy/J (Lowest value) | | |
| 22 | K | 20 | 16 | Butt joint | 6 (Laser cutting) | 4 (Laser cutting) | ○ | ○ | ○ | 94 | ○ | |
| | | | | Elbow angle joint | 25 (Gas cutting) | 16 (Mill scales) | ○ | ○ | - | - | | Comparative steel |
| 24 | B | 6 | 53 | Butt joint | 5 (Laser cutting) | 5 (Laser cutting) | ○ | × | × | 12 | × | |
| | | | | Elbow angle joint | 23 (Gas cutting) | 59 (Mill scales) | × | × | - | - | | |
| 25 | C | 6 | 63 | Butt joint | 5 (Laser cutting) | 6 (Laser cutting) | ○ | × | × | 13 | × | |
| | | | | Elbow angle joint | 24 (Gas cutting) | 63 (Mill scales) | × | × | - | - | | |
| 26 | D | 9 | 54 | Butt joint | 5 (Laser cutting) | 4 (Laser cutting) | ○ | × | × | 19 | × | |
| | | | | Elbow angle joint | 26 (Gas cutting) | 54 (Mill scales) | ○ | × | - | - | | |
| 28 | F | 9 | 51 | Butt joint | 4 (Laser cutting) | 4 (Laser cutting) | ○ | × | × | 11 | × | |
| | | | | Elbow angle joint | 25 (Gas cutting) | 51 (Mill scales) | ○ | × | - | - | | |

(continued)

| Test No | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray test | Tensile test | Charpy/J (Lowest value) | | |
| 29 | G | 15 | 57 | Butt joint | 5 (Laser cutting). | 4 (Laser cutting) | ○ | × | × | 15 | × | |
| | | | | Elbow angle joint | 25 (Gas cutting) | 57 (Mill scales) | ○ | × | - | - | | |
| 30 | H | 15 | 59 | Butt joint | 5 (Laser cutting) | 6 (Laser cutting) | ○ | × | × | 11 | × | |
| | | | | Elbow angle joint | 23 (Gas cutting) | 59 (Mill scales) | ○ | × | - | - | | |

Table 6 Test results

| Test No. | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray test | Tensile test | Charpy/J (Lowest value) | | |
| 31 | I | 15 | 60 | Butt joint | 5 (Laser cutting) | 4 (Laser cutting) | ○ | × | × | 6 | × | |
| | | | | Elbow angle joint | 26 (Gas cutting) | 60 (Mill scales) | ○ | × | - | - | | |
| 32 | J | 20 | 59 | Butt joint | 4 (Laser cutting) | 4 (Laser cutting) | ○ | × | × | 4 | × | |
| | | | | Elbow angle | 24 (Gas cutting) | 59 (Mill scales) | ○ | × | - | - | | |
| 33 | K | 20 | 54 | Butt joint | 5 (Laser cutting) | 6 (Laser cutting) | ○ | × | × | 7 | × | |
| | | | | Elbow angle joint | 23 (Gas cutting) | 54 (Mill scales) | ○ | × | - | - | | |
| 34 | L | 6 | 41 | Butt joint | 6 (Laser cutting) | 4 (Laser cutting) | × | × | × | 10 | × | |
| | | | | Elbow angle joint | 24 (Gas cutting) | 41 (Mill scales) | × | × | - | - | | |
| 35 | M | 6 | 40 | Butt joint | 5 (Laser cutting) | 6 (Laser cutting) | × | × | × | 11 | × | |
| | | | | Elbow angle joint | 26 (Gas cutting) | 40 (Mill scales) | × | × | - | - | | |
| 36 | N | 9 | 42 | Butt joint | 4 (Laser cutting) | 5 (Laser cutting) | × | × | × | 14 | × | Comparative steel |
| | | | | Elbow angle joint | 24 (Gas cutting) | 42 (Mill scales) | × | × | - | - | | |

(continued)

| Test No. | Steel | Thickness (mm) | Mill scale thickness (μm) | Weld joint shape | Scale thickness at welded end surface (μm) | | Test item | | | | Synthetic judgement | Remarks |
|---|---|---|---|---|---|---|---|---|---|---|---|---|
| | | | | | | | Bead appearance | X-ray test | Tensile test | Charpy/J (Lowest value) | | |
| 37 | O | 9 | 41 | Butt joint | 5 (Laser cutting) | 6 (Laser cutting) | × | × | × | 18 | × | |
| | | | | Elbow angle joint | 27 (Gas cutting) | 41 (Mill scales) | × | × | - | - | | |
| 38 | P | 15 | 40 | Butt joint | 5 (Laser cutting) | 7 (Laser cutting) | × | × | × | 18 | × | |
| | | | | Elbow angle joint | 24 (Gas cutting) | 40 (Mill scales) | × | × | - | - | | |
| 39 | Q | 15 | 41 | Butt joint | 5 (Laser cutting) | 6 (Laser cutting) | × | × | × | 18 | × | |
| | | | | Elbow angle joint | 27 (Gas cutting) | 41 (Mill scales) | × | × | - | - | | |
| 40 | R | 20 | 40 | Butt joint | 5 (Laser cutting) | 7 (Laser cutting) | × | × | × | 18 | × | |
| | | | | Elbow angle joint | 25 (Gas cutting) | 40 (Mill scales) | × | × | - | - | | |
| 41 | S | 20 | 40 | Butt joint | 5 (Laser cutting) | 7 (Laser cutting) | × | × | × | 16 | × | |
| | | | | Elbow angle joint | 25 (Gas cutting) | 40 (Mill scales) | × | × | - | - | | |

Industrial Applicability

As shown in the foregoing, sound welded joints and satisfactory mechanical properties can be secured when a steel material according to the present invention is used, even when welding work is done to portions such as steel surfaces covered with mill scales and cut end sections covered with scales without any pretreatment to remove the scales. Thus, the present invention brings about a remarkable advantage.

## Claims

**1.** Use of a steel in laser welding, the steel containing, by weight %,

0.01 to 0.20% of C,
0.01 to 1.5% of Si,
0.2 to 2.0% of Mn,
0.02% or less of P,
0.02% or less of S and
0.031 to 1.0% of Al; and

optionally further containing, by weight %, one or more of

0.001 to 0.1% of Ti,
0.001 to 0.1% of Zr,
0.0001 to 0.02% of Mg,
0.0001 to 0.02% of Ca and
0.001 to 0.3% of REM; and

further optionally containing, by weight %, one or more of 0.001 to 0.1% of Nb, 0.001 to 1.0% of V, 0.001 to 2.0% of Mo, 0.01 to 3.0% of Cu, 0.01 to 7.0% of Ni, 0.01 to 5.0% of Cr and 0.0001 to 0.01% of B the balance consisting of Fe and unavoidable impurities; and the value of Y defined by the following equation (1) satisfying 0.4 < Y < 1.5,

$$Y = 0.88[\%Al] + 1.14[\%Si] + 0.67[\%Ti] + 0.35[\%Zr] + 0.66[\%Mg] + 0.40[\%Ca] + 0.30[\%REM] \quad \ldots (1).$$

**2.** Use of a steel in laser welding according to claim 1 wherein the thickness of the mill scales of the stell is 50 $\mu$m or less.

## Patentansprüche

**1.** Verwendung eines Stahls beim Laserschweißen, wobei der Stahl in Gewichts-% enthält:

0,01 % bis 0,20 % C,
0,01 % bis 1,5 % Si,
0,2 % bis 2,0 % Mn,
0,02 % oder weniger P,
0,02 % oder weniger S und
0,031 % bis 1,0 % Al und

wahlweise weiterhin in Gewichts-% eines oder mehrere Elemente von:

0,001 % bis 0,1 % Ti,
0,001 % bis 0,1 % Zr,
0,0001 % bis 0,02 % Mg,
0,0001 % bis 0,02 % Ca und
0,001 % bis 0,3 % Seltene Erd-Metalle (REM) und

weiterhin wahlweise in Gewichts-% eines oder mehrere Elemente von:

0,001 % bis 0,1 % Nb,
0,001 % bis 1, 0 % V,
0,001 % bis 2,0 % Mo,
0,01 % bis 3,0 % Cu,
0,01 % bis 7,0 % Ni,
0,01 % bis 5,0 % Cr und
0,0001 % bis 0,01 % B,

wobei der Rest aus Fe und unvermeidbaren Verunreinigungen besteht und der durch die folgende Gleichung (1) beschriebene Y Wert die Bedingung 0,4 < Y < 1,5 erfüllt,

$$Y = 0,88\ [\%Al] + 1,14\ [\%Si] + 0,67\ [\%Ti] + 0,35\ [\%Zr] + 0,66\ [\%Mg] + 0,40\ [\%Ca] + 0,30\ [\%REM]. \quad (1)$$

**2.** Verwendung eines Stahls beim Laserschweißen gemäß Anspruch 1, wobei die Walzsinterdicke des Stahls 50 μm oder weniger beträgt.

## Revendications

**1.** Utilisation d'un acier dans le soudage au laser, l'acier contenant, en % en poids,

0,01 à 0,20 % de C
0,01 à 1,5 % de Si,
0,2 à 2,0 % de Mn,
0,02 % ou moins de P,
0,02 % ou moins de S et
0,031 à 1,0 % d'Al ; et

éventuellement contenant en plus, en % en poids, l'un ou plusieurs parmi

0,001 à 0,1 % de Ti,
0,001 à 0,1 % de Zr,
0,0001 à 0,02 % de Mg,
0,0001 à 0,02 % de Ca et
0,001 à 0,3 % de REM (métaux des terres rares) ; et

éventuellement en plus contenant, en % en poids, l'un ou plusieurs parmi

0,001 à 0,1 % de Nb,
0,001 à 1,0 % de V,
0,001 à 2,0 % de Mo,
0,01 à 3,0 % de Cu,
0,01 à 7,0 % de Ni,
0,01 à 5,0 % de Cr et
0,0001 à 0,01 % de B

le reste étant constitué par du Fe et d'inévitables impuretés ; et la valeur de Y, définie par l'équation (1) suivante, satisfaisant à 0,4 < Y < 1,5,

Y = 0,88 [% d'Al] + 1,14 [% de Si] + 0,67 [% de Ti] + 0,35 [% de Zr] + 0,66 [% de Mg] + 0,40 [% de Ca] + 0,30 [% de REM] .. (1).

**2.** Utilisation d’un acier dans le soudage au laser selon la revendication 1, dans laquelle l’épaisseur des calamines de l’acier est de 50 μm ou moins.

Fig.1

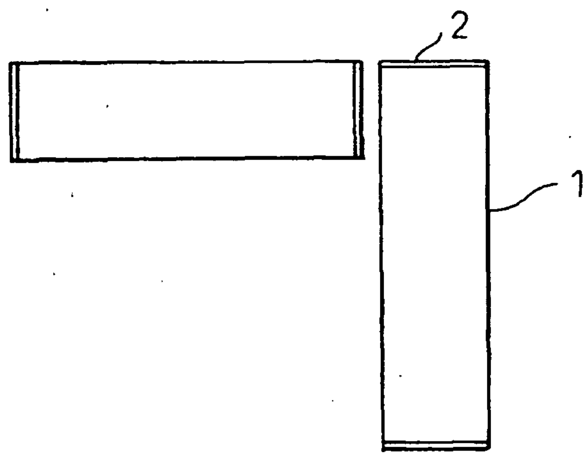


Fig.2

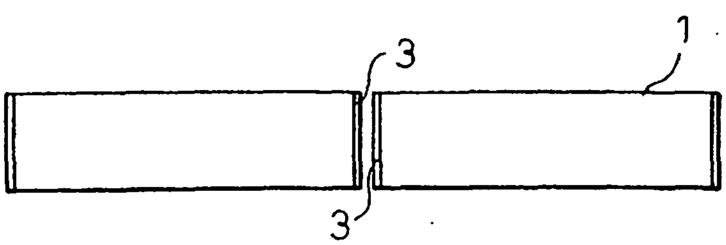

Fig.3

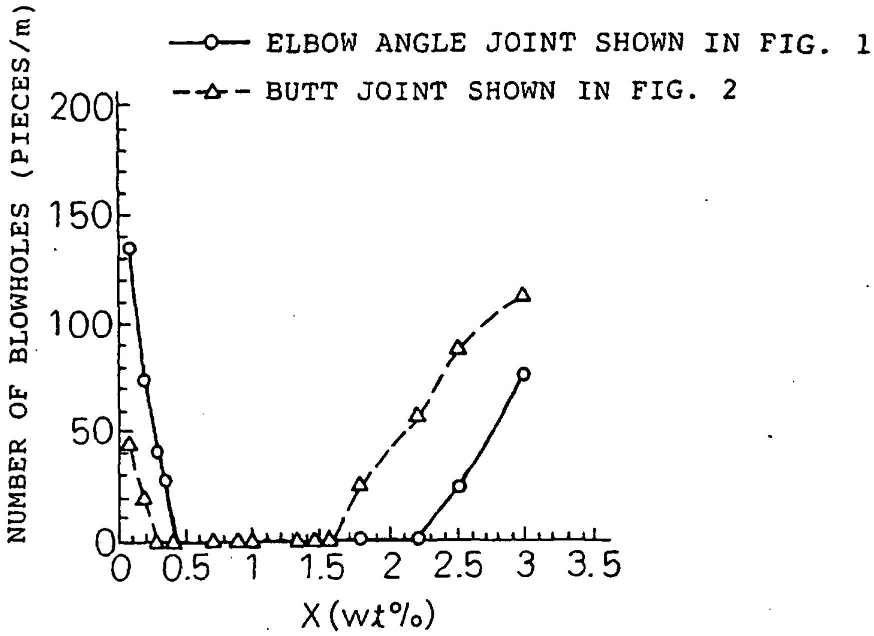


X= 0.88[%Al] + 1.14[%Si]

Fig.4

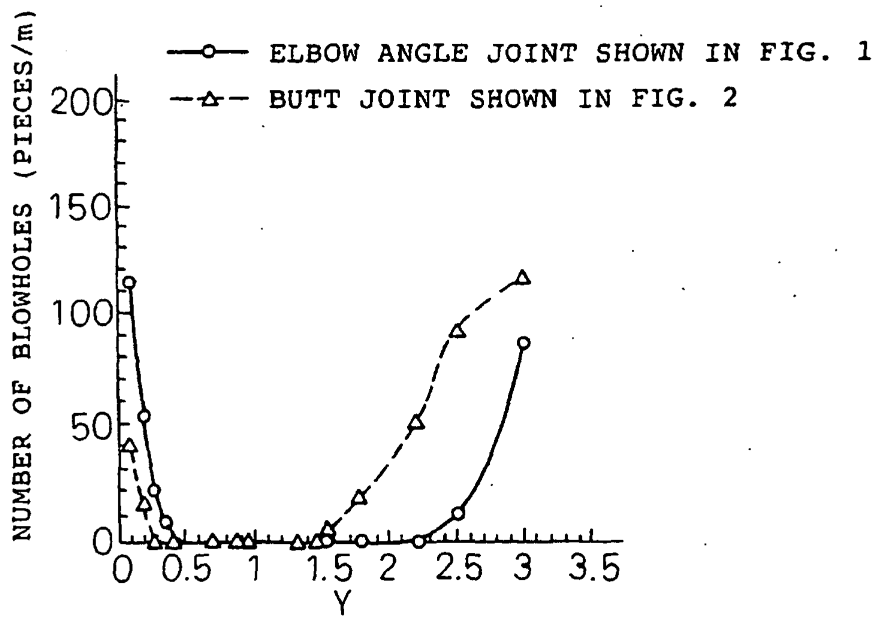


Y = 0.88[%Al] + 1.14[%Si] + 0.67[%Ti]
+ 0.35[%Zr] + 0.66[%Mg] + 0.40[%Ca]
+ 0.30[%REM]

Fig.5

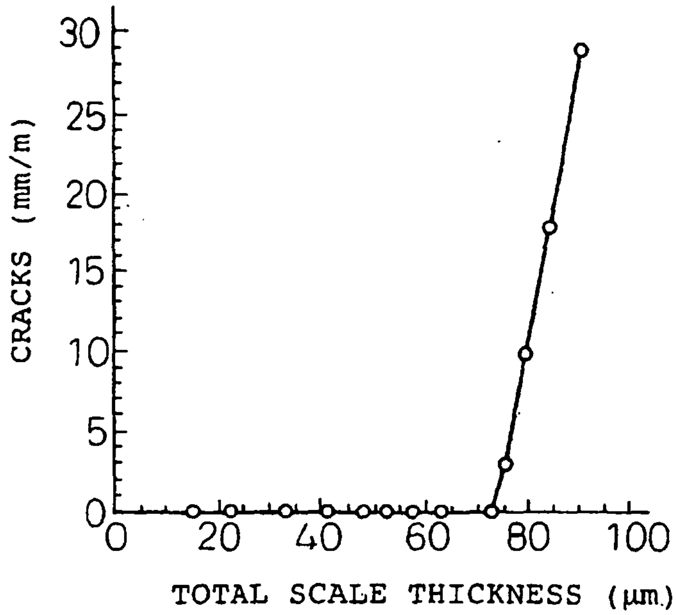


Fig.6

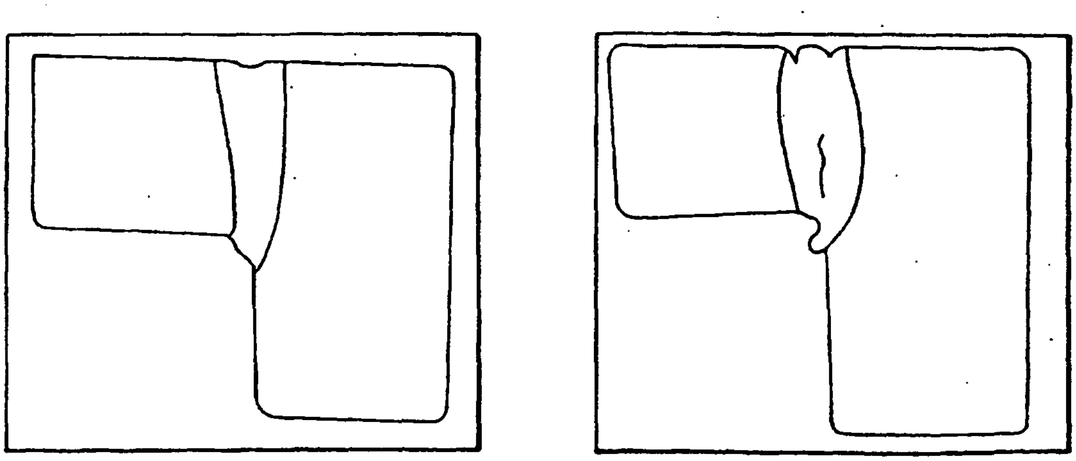

MILL SCALE THICKNESS: 40 μm
GAS-CUT END SURFACE SCALES: 26 μm

MILL SCALE THICKNESS: 55 μm
GAS-CUT END SURFACE SCALES: 24 μm

10mm

Fig. 7

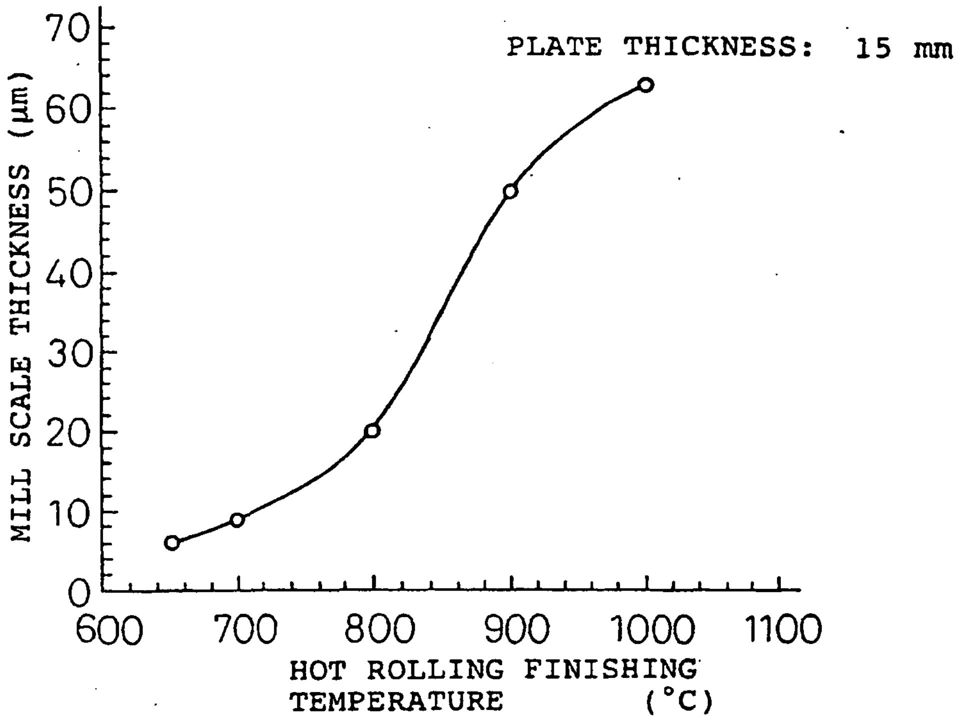
PLATE THICKNESS: 15 mm
MILL SCALE THICKNESS (μm)
0
10
20
30
40
50
60
70
600
700
800
900
1000
1100
HOT ROLLING FINISHING
TEMPERATURE (°C)